Europäisches Patentamt

European Patent Office

Office européen des brevets

(11) Publication number: 0 341 093 A2

# (12) EUROPEAN PATENT APPLICATION

(21) Application number: 89304636.7

(22) Date of filing: 08.05.89

(51) Int. Cl.4: G 01 N 21/62
G 01 N 21/65, G 01 N 23/223,
G 01 N 21/87
// B07C5/342

(30) Priority: 06.05.88 GB 8810723
07.07.88 GB 8816167
09.11.88 GB 8826225
23.03.89 GB 8906853

(43) Date of publication of application:
08.11.89 Bulletin 89/45

(84) Designated Contracting States: BE DE NL

(71) Applicant: GERSAN ESTABLISHMENT
Staedtle 36
FL-9490, Vaduz (LI)

(72) Inventor: Smith, Martin Phillip
18 Hamilton Road
Wargrave Berkshire RG10 8BB (GB)

Smith, Robin Wyncliffe
79 Outram Road
Croydon Surrey CR0 6XJ (GB)

Stewart, Andrew David Garry
The Old Rectory
Ashampstead Reading Berkshire (GB)

Brink, Daniel Johannes
513 Rossouw Street
The Willows Pretoria R9A (ZA)

Cooper, Martin
37 Terrington
Marlow Buckinghamshire SL7 2RE (GB)

Welbourn, Christopher Mark
Oswald London Road
Sunningdale Berkshire (GB)

Spear, Paul Martin
3 Bottisham Close Lower Earley
Reading Berkshire RG6 4ED (GB)

(74) Representative: Lyndon-Stanford, Edward Willoughby
Brooke et al
MARKS & CLERK 57/60 Lincoln's Inn Fields
London WC2A 3LS (GB)

(54) Identifying gemstones.

(57) In order to determine whether a particle is a diamond, 514.5 nm laser radiation, modulated at a frequency of 10 MHz to 1 GHz, is projected onto the particle 2, and the radiation emitted by the particle 2 is collected by a wide aperture viewing system 23 with narrow band pass filtering of the diamond Stokes or anti-Stokes Raman frequency appropriate to the laser wavelength. The emitted radiation is detected by a detector 6, and an associated electronic circuit 13,14,15 detects signals modulated at the same frequency as the laser modulation frequency. In this way, only Raman radiation is detected as this has a very short rise/decay time; other luminescence forms a background which is not modulated and can be removed by for instance thresholding, or heterodyne techniques. The method can be used to sort diamond from gangue on a wide belt, without very complicated optics.

FIG.4.

EP 0 341 093 A2

# Description

## IDENTIFYING GEMSTONES

### Background of the Invention

The present invention relates to a method of, and apparatus for, identifying gemstones, in which incident or exciting radiation is projected onto the particle in question, the emitted radiation is detected, and the gemstone is identified according to the radiation emitted. The method can be used to examine single particles or a number of particles along an extended line.

The invention was developed for sorting gemstones, and specifically diamonds, from gemstone-bearing ore, to separate the diamonds from gangues (host material). It is desirable to be able to identify gemstones among gangue particles which are moving in wide path, normally on a conveyor belt but possibly whilst dropping or in flight from the end of a conveyor belt or in another means of conveyance such as a liquid carrier. The width of the path can be any suitable width, for instance 300 mm or 1 or 2 meters; in general, the width of the path should be capable of accommodating a number of the particles. However, the invention can be used as a general technique for examining and can be applied to identifying any suitable discrete objects or to general inspection techniques.

The remainder of the description is particularly concerned with using the Raman emission, but the invention is equally applicable to detecting other emitted radiation, such as X-ray luminescence, or radiation or luminescence exited by visible, infra-red or ultra-violet radiation.

It is known that when certain materials are irradiated, in addition to scattering the incident radiation, they emit radiation in bands of frequencies different from the exiting radiation - this is called the Raman shift. The frequency bands (called Stokes and anti-Stokes) are different from and equally spaced on either side of the frequency of the exciting radiation; the frequency differences are uniquely characteristic of a material. These emissions enable diamond to be identified and sorted from other materials such as spinel, calcite and zirccons. Although there are two Raman frequencies, one normally looks at the lower frequency (longer wavelength) Stokes emission as it has the greater intensity under normal operating conditions.

The possibility of using the Raman shift to sort or identify diamonds has been described in general terms in for instance GB-A-2 140 555, GB-A-2 199 657, WO 86/07457 and WO 88/01378.

Normally, the exciting radiation not only causes the diamond Raman emissions, but also excites other luminescences. The gangue does not exhibit Raman emission with a frequency shift characteristics of diamond. However gangue, and some diamonds, emit other wavelength radiation or fluorescence, and this gives considerable problems in identifying only Raman radiation and hence the diamonds. The Raman emission is very weak, and can be completely swamped by the other emitted radiations.

### The Invention

The present invention provides methods as set forth in Claims 1, 2 or 13 and apparatus as set forth in Claims 7, 8 or 14. The remaining Claims set forth preferred or optional features of the invention.

The invention provides better discrimination from competing luminescence (e.g. to sort diamonds from zircons) and background luminescence. There is no need for e.g. beam splitters to detect and subtract the background luminescence. It may also be possible to have larger apertures or larger pass bands in the viewing system, and hence greater radiation capture.

Using the invention, the Raman radiation is distinguished from the other emitted radiations by the very fast rise and decay times, or life times of Raman emissions - the rise and decay times are roughly the same, and are about 3 ps, though at this speed the times are substantially affected by the transit time through the diamond itself and hence by the size of the diamond; the luminescence rise and decay times, or life times, for diamonds and certain minerals which one expects to find in diamond-bearing gangue ar generally between 3 ns and 10 ms. Although not limited to such values, the invention can be used to detect emitted radiations having life times from 3ps to 100 msec, say, depending on the type of sort being carried out and the radiation to be detected; luminescence lifetimes will in general be of the order of nanoseconds up to of the order of tens of nanoseconds. For diamond and other objects and zones, any luminescence can be detected which has a rise, decay or life time shorter than that luminescence emitted by competing material and which would pass through any filtering used; it should be noted in this context that e.g. when sorting diamonds from gangue, it is acceptable if some lumps of gangue are also sorted out with the diamonds.

The use of delay times in examining samples has been disclosed in US 4 632 550, US 4 786 170, an article by Van Duyne et al in "Analytical Chemistry", Vol. 46, No. 2, pp 213-222, an article by Everall et al in "Journal of Raman Spectroscopy", Vol. 17, pp 414-423, an article by Watanabe et al in "Review of Scientific Instrument", 56 (6), pp 1195-1198, and an article by Howard et al in "Journal of Physical and Scientific Instruments", 19, pp 934-943.

In practice, the exciting irradiation can be modulated at a frequency of say 10 MHz to 1 GHz. The radiation emitted by the object or zone being examined will try and follow the modulated exciting irradiation and is detected e.g. with a detetor having a rise time response of say about 0.2 ns. Thus the invention exploits the very short life time of say the Raman signal compared to the relatively long life times of other luminescence processes; a good signal would be obtained from the Raman emission and lower signals from the other luminescence as the other luminescence would not be fully active due to its relatively long rise time constants. In a preferred system, the exciting irradiation is modulated such that the time interval of the modulation is short compared to the rise or decay time of the luminescence emission. A detection system and associated electronics can process the signals and select and eject material according to luminescent rise/decay time or life time criteria. In a general sense, the detector should provide a signal which is modulated at a frequency corresponding to the incident radiation frequency; to do this, the detector itself could in theory be switched on and off or made effective and ineffective, or its output signal could be chopped, at a frequency normally equal to the incident radiation frequency (though e.g. a multiple of the pulse frequency is in theory possible). In practice, it is preferred to keep the detector on and determine whether it is giving a signal containing a modulation burst at the incident radiation frequency; the modulation burst is following the e.g. Raman emission. In efffect, by using phase sensitive and other detection techniques, it is possible to detect the Raman emission as the AC component of the signal. The background fluorescence will be the DC component of the detected signal.

Some form of narrow band pass filtering may be required as other materials present may also have luminescence of a similar life time, but at a different wave length. However, in general, much more of the emitted radiation can be collected using the invention. A wide aperture viewing system can be arranged so that the angle of incidence on the narrow band pass filter means is within acceptable limits. Such a viewing system is described in our Patent Application No. EP 89 304 642.

The exciting radiation can be modulated by pulsing (chopping), e.g. sinusoidal or triangular. This may be achieved by using an external modulator or a mode-locked laser. In general, the exciting radiation can have any suitable form.

It is possible to operate with more than one modulation frequency and/or laser wavelength to perform multiple sorting (or object or zone identification) or alternatively strengthened discrimination, on the basis or different decay or life time modes; a multiple sort could for instance be for diamonds, emeralds and rubies. This could be done with a single source of exciting radiation, or with more than one source irradiating the same location, and employing beam splitting to detect the different frequencies - the exciting radiation can contain different wavelengths, e.g. by projecting with two different lasers. Alternatively, the objects or zones can be sequentially irradiated and/or detected.

The intensity of the anti-Stokes signal is, at room temperature, calculated as being approximately one three-hundredths of the intensity of the Stokes signal. This made the anti-Stokes Raman signal very unattractive, particularly having regard to the fact that the Stokes signal itself is very weak; it is difficult to capture sufficient Raman radiation for examination of an object.

However, it has been found that the use of the anti-Stokes signal can be advantageous in the particular cases of identifying diamonds, or of examining gangue for picking out diamonds. The background competing luminescence from the diamond itself may be significantly reduced on the shorter wave-length (higher energy) side of the incident radiation wave-length, resulting in an improved Raman signal to background ratio. In other words, at the wave-lengths detected, there is less broad band luminescence from the diamond itself. The lessened contamination enables one to use slightly wider band width optical filters in an optical detection system, for instance reducing the necessity to avoid off-axis incident radiation. Furthermore, detection instruments, such as photomultiplier photocathodes, have enhanced sensitivity at shorter wave-lengths.

The material being sorted can be heated, which increases the relative strength of the anti-Stokes signal. It would be possible to look at both Raman signals simultaneously, and in this way obtain additional discrimination.

## The Drawings

The invention will be further described, by way of example, with reference to the accompanying drawings, in which:-

Figure 1 is a schematic diagram illustrating the principle of the invention;

Figure 2 is a schematic diagram illustrating the principle of operation of one embodiment of the invention;

Figure 3 illustrates a first embodiment of the invention; and

Figure 4 illustrates a second embodiment of the invention.

## Figures 1 and 2

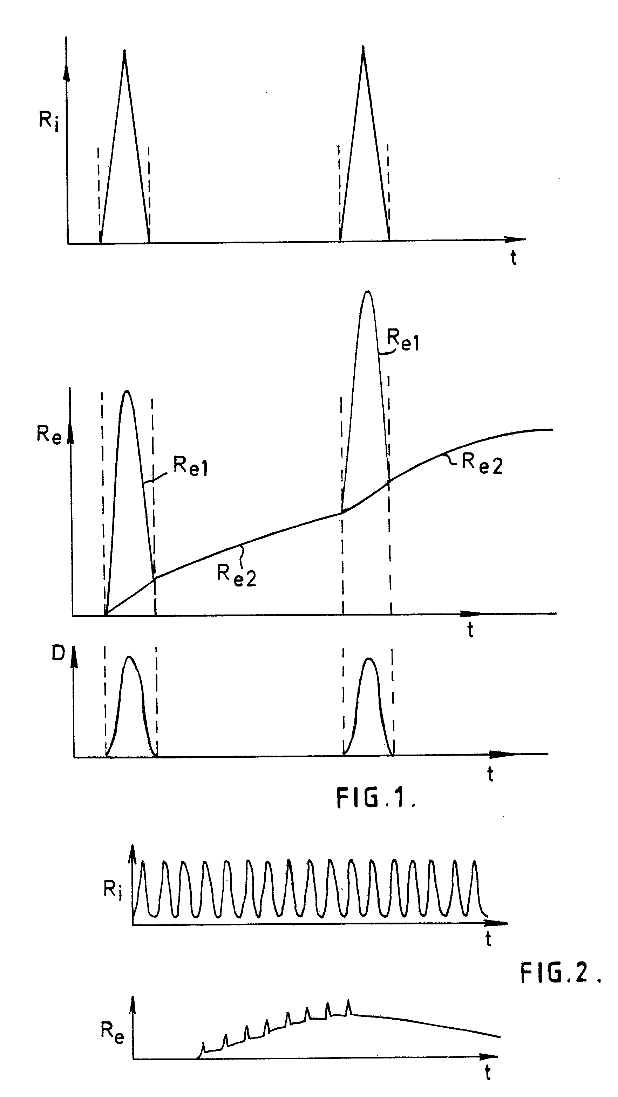

Figure 1 shows three schematic graphs against time, $R_i$ being the incident, exciting irradiation, $R_e$ being the emitted radiation and D being the detection. In the $R_e/t$ graph, $R_{e1}$ is the Raman emission and $R_{e2}$ is fluorescence.

The exciting radiation is pulsed als in the $R_i/t$ graph and the detector is activated, or its output signal is chopped, as in the $D/t$ graph. It will be seen that the detector is effective when the Raman emission $R_{e1}$ is near its maximum and the other luminescent radiation $R_{e2}$ has not risen so far as to interfere with the detection of the Raman emission $R_{ei}$, i.e. the detector does not effectively detect emitted radiation which has a substantially longer rise time than the Raman emission $R_{e1}$. By keeping the pulse length short relative to the pulse frequency, the intensity of the other luminescence remains low and the Raman emission is either of greater intensity than the other luminescence, or at least of sufficient intensity to be detectable.

Figure 2 shows, on a much longer time scale $t$, the exciting radiation $R_1$ and the emitted radiation $R_e$ when a diamond is detected, i.e. when the scan passes over a diamond. The detector signal will be similar to that of the emitted radiation. The modulation burst indicates Raman emission and hence the presence of the diamond. The Raman emission can be distinguished by suitable thresholding which removes the background signal caused by other luminescence, or can be distinguished by heterodyne detection or any suitable demodulation electronics.

Figure 3

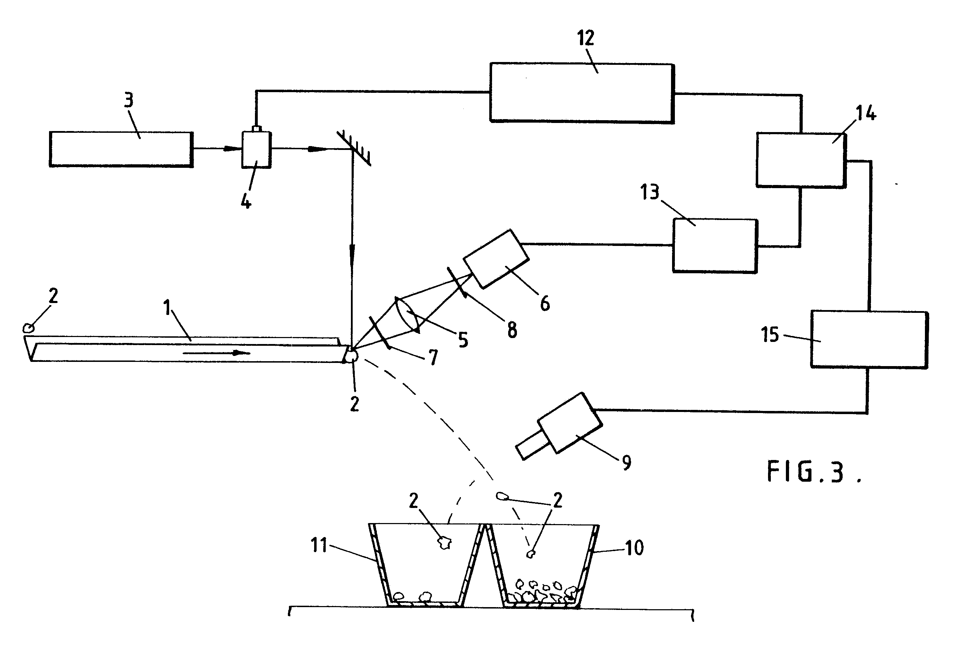

Figure 3 shows a simple practical arrangement, in which a V-belt 1 is used as a single particle feeder (a similar single particle feeder such as a pick-up wheel may be used). The objects or particles 2 are fed onto the belt 1 in any suitable way, and at the end of the belt pass through a beam projected by a laser 3 with an optical laser beam modulator 4. The modulator 4 modulates the beam in a generally sinusoidal manner. At the point where the beam strikes the particles 2, the particles 2 are examined by an optical collection system 5 and a detector 6 in the form of a photo-multiplier tube (PMT). Suitable filters are incorporated, a laser wavelength blocking filter 7 and a narrow band pass filter 8 being shown. As the particles 2 are projected off the end of the belt 1, they pass suitable ejection means, shown as an air jet 9. Reject particles 2 (which would be the vast majority in the case of gangue sorting) do not cause the air jet 9 to be operated and pass into a reject bin 10. Selected particles cause the air jet 9 to be operated and are blown out of their normal trajectory into a sort bin 11.

In one embodiment using a 2 watt argon ion laser 3, the laser wavelength is 514.5 nm, modulated at a frequency of 1 GHz. 552.4 nm Raman emission (the diamond Stokes emission) can be observed using a 1 nm wide band pass for the filter 8, provided the background is subtracted by ratioing the backgrounds at 537 and 567 nm generally as described in said Patent Application. Alternatively, a 5 nm band can be used for the pass filter 8, with no background subtraction. It is believed possible, and may be preferable, to observe the 481.5 nm anti-Stokes emission, in a similar manner. The modulator 4 can be a Bragg cell, or the laser 3 and modulator 4 can be replaceld by a mode-locked laser. The PMT 6 can be a microchannel plate PMT, which has a very fast time.

Another embodiment uses a helium-neon laser operating at 632.8 nm, its principal Raman emissions for diamond consist of two sharp lines at 691.1 nm (Stokes) and 583.6 nm (anti-Stokes).

The electronic circuitry includes a demodulator drive 12 for the beam modulator 4, an amplifier/power supply unit 13, a demodulator 14 for the signal from the PMT 6, and a microprocessor 15 with the necessary logic for identifying the Raman emissions from e.g. diamonds and activating the jet 9.

Figure 4

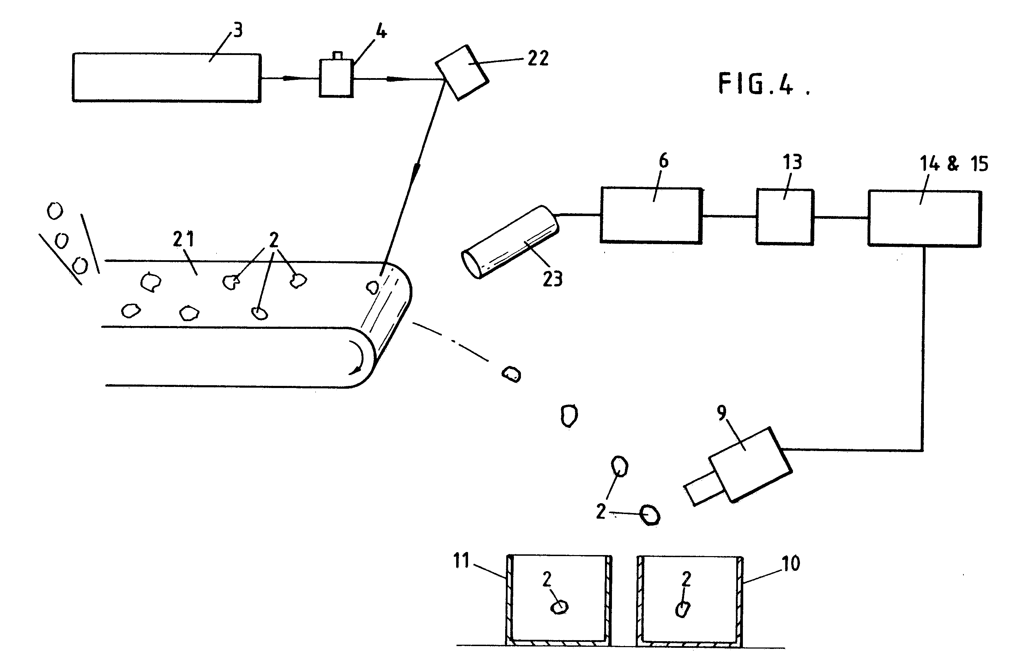

In Figure 4, the beam from the laser 3 is scanned across a wide belt 21 using a suitable scanning system 22 (e.g. a galvonometer or rotating polygon). In this way, the laser beam is scanned across the belt 21 just before the particles 2 are projected off the belt. A suitable light collecting system 23 is used. The system 23 has a wide aperture and a narrow band pass filter with the optics arranged so that the angle of incidence on the filter is within acceptable limits. Such optical systems are described in general terms in said Patent Application, and Figures 2 to 7 of said Patent Application disclose one suitable system.

Any thing discussed in said Patent Application can be incorporated in the present invention, provided it is suitable. Said Patent Application gives many details which are applicable to the present invention.

The present invention has been described above purely by way of example, and modifications can be made within the spirit of the invention.

**Claims**

1. A method of identifying a gemstone, comprising irradiating the gemstone with modulated radiation so as to cause the emission from the gemstone of radiation having a short rise and/or decay time, and detecting emitted radiation which is modulated at a frequency corresponding to the frequency of modulation of the exciting radiation.

2. A method of identifying gemstones among gangue particles which are moving in a path whose width can accommodate a number of the particles, comprising:
irradiating a line across the path with modulated radiation so as to cause an emission from gemstones to be identified of radiation having a short rise and/or decay time; and
detecting emitted radiation which is modulated at a frequency corresponding to the frequency of modulation of the exciting radiation.

3. The method of Claim 2, wherein the emitted radiation is detected using a wide aperture viewing system with narrow band pass filtering.

4. The method of any of the preceding Claims, wherein the gemstone(s) is diamond.

5. The method of any of the preceding Claims, wherein the emitted radiation is Raman.

6. The method of Claim 5, wherein the emitted radiation is anti-Stokes.

7. Apparatus for identifying gemstones which are irradiated with modulated radiation so as to cause an emission from the gemstone of radiation having a short rise and/or decay time, comprising means for detecting emitted radiation which is modulated at a frequency corresponding to the frequency of modulation of the exciting radiation.

8. Apparatus for identifying gemstones among gangue particles which are moving in a path whose width can accommodate a number of the particles, and across which path a line is irradiated with modulated radiation so as to cause an emission from gemstones to be identified of radiation having a short rise and/or decay time, the apparatus comprising means for detecting emitted radiation which is modulated at a frequency corresponding to the frequency of modulation of the exciting radiation.

9. The apparatus of Claim 8, wherein the detecting means comprise a wide aperture viewing system including narrow band pass filtration.

10. The apparatus of any of Claims 7 to 9, wherein the gemstones are diamonds.

11. The apparatus of any of claims 7 to 10, wherein the emitted radiation is Raman.

12. The apparatus of Claim 11, wherein the emitted radiation is anti-Stokes.

13. A method of identifying gemstones, substantially as herein described with reference to any of the Figures of the accompanying drawings.

14. Apparatus for identifying gemstones, the apparatus being substantially as herein described with reference to, and as shown in, Figure 3 or Figure 4 of the accompanying drawings.

15. The apparatus of any of Claims 7 to 12 and 14, and further comprising means for projecting the exciting radiation.

16. The apparatus of any of Claims 8, 9 or 14, or of any of claims 10 to 12 when read as appendant to Claim 8, further comprising means for moving the gangue particles in a path whose width can accommodate a number of the particles, and means for irradiating a line across the path with the modulated radiation.

FIG.1.

FIG.2.

FIG.3.

FIG.4.